# EUROPEAN PATENT APPLICATION

(11) **EP 2 546 109 A1**
(43) Date of publication of application: **16.01.2013**
(21) Application number: 11753294.5
(22) Date of filing: 04.03.2011
(51) Int. Cl.: B60R 21/0136, B60R 21/16

(54) **SUPPORT MEMBER, DETECTION UNIT, SIDE SURFACE COLLISION DETECTION SYSTEM, AND OCCUPANT RESTRAINT SYSTEM**

(30) Priority: 09.03.2010 JP 2010052420
(71) Applicant: Takata Corporation, Tokyo 107-8508 (JP)
(72) Inventor: ITOGA Yasuo, Tokyo 107-8508 (JP); OOI Kazuya, Tokyo 107-8508 (JP); MIHARA Atsushi, Tokyo 107-8508 (JP); OIGAWA Atsuhiko, Tokyo 107-8508 (JP); KAWAGUCHI Hiroo, Tokyo 107-8508 (JP)
(74) Representative: Banzer, Hans-Jörg
(86) International application number: PCT/JP2011/055133
(87) International publication number: WO 2011/111635

(57) **Abstract**

An acceleration sensor (40R) for detecting a side surface collision which occurs in a vehicle is mounted on a beam (112) of a door via a support member (50). When a force due to a collision acts on the beam (112), this force is dampened by the support member (50) and thereafter transmitted to the acceleration sensor (40R). As a result, even if the beam (112) moves at an acceleration exceeding the rated input of the acceleration sensor (40R), the acceleration of the acceleration sensor (40R) is suppressed to a level not greater than the rated input. Accordingly, the side surface collision can be detected with high accuracy without using a sensor having a high rated input.

## Description

### Technical Field

The present invention relates to support members, detection units, side surface collision detection systems, and occupant restraint systems, and more particularly relates to: a support member which supports an acceleration sensor on a beam of a door; a detection unit including the support member; a side surface collision detection system which detects a side surface collision in a vehicle; and an occupant restraint system for restraining an occupant.

### Background Art

As for occupant restraint systems such as air bag devices which are carried by vehicles, miniaturization and reduction in the costs of the devices have been propelled and the systems are currently carried as standard in most vehicle types. In recent years, not only occupant restraint systems which detect collisions from the front of vehicles to restrain occupants but also occupant restraint systems which detect collisions from the sides of vehicles (side surface collisions) to restrain occupants are included as standard equipment.

However, in the case of a side surface collision, a structure which absorbs collision energy is only the door located immediately adjacently to an occupant. Therefore, for protecting the occupant from the side surface collision, it is important to detect the collision in a short time and to quickly expand an air bag. Thus, there have variously been proposed the technologies of quickly detecting side surface collisions (e.g., see Patent Literature 1).

A device described in Patent Literature 1 monitors the displacement of the specific position (particular position) of a beam disposed on a door via a displacement sensor. Then, a difference between the particular position prior to a collision and the particular position after the collision is detected as a displacement, and the side surface collision is detected based on the detected displacement and the variation degree (displacement speed) of this displacement.

### Prior Art Literature

### Patent Literature

### Patent Literature 1:

Unexamined Japanese Patent Application Kokai Publication No. 2009-101805

### Disclosure of Invention

### Problems to be Solved by the Invention

There is a certain limit to the rate of acceleration which can be detected by an acceleration sensor. Therefore, when an acceleration sensor is mounted on a beam of a door and/or the like on which a force at the time of a collision directly acts, an acceleration rate exceeding a rating (measurement limit) may be input into the acceleration sensor to saturate an output from the acceleration sensor. A detecting element may also resonate depending on the input acceleration. In such a case, the error rate included in the output from the acceleration sensor is increased which decreases the accuracy of detection of a collision.

It is also conceivable to use an acceleration sensor with a high rating input value in order to detect a side surface collision. However, acceleration sensors with high rating input values are very expensive.

The present invention is accomplished with respect to the above-mentioned circumstances and is aimed to making it possible to use an acceleration sensor in detection of a side surface collision and at in turn realizing reduction in the cost of a device.

### Means for Solving the Problems

In order to achieve the above-described objects, a support member according to a first aspect of the present invention supports an acceleration sensor on a beam disposed on a door of a vehicle, the support member comprising:
an affixer affixed to the beam; and
a supporter which supports the acceleration sensor at a position apart from the affixer,
wherein the supporter dampens a force transmitted from the beam to the acceleration sensor by elasticity.

The supporter may also support the acceleration sensor at a position offset vertically downward from the affixer.

The support member according to the present invention may also further comprise a protrusion which protrudes toward an outside plate of the door.

The acceleration sensor is affixed to an opposite surface of a surface, facing an outside plate of the door, of the supporter; and
the support member according to the present invention may also comprise a protector which avoids interference between the acceleration sensor and a window disposed on the door.

A detection unit according to a second aspect of the present invention comprises:
an acceleration sensor which detects an acceleration rate; and
the support member according to the present invention, which supports the acceleration sensor.

A side surface collision detection system according to a third aspect of the present invention detects a side surface collision in a vehicle, the side surface collision detection system comprises:
an acceleration sensor supported by the support member according to the present invention; and
detecting means which detects a side surface collision occurring in the vehicle based on an output from the acceleration sensor.

An occupant restraint system according to a fourth aspect of the present invention comprises:
the side surface collision detection system according to the present invention;
occupant restraint means which restrains an occupant in the vehicle; and
control means which controls the occupant restraint means when a side surface collision is detected by the side surface collision detection system.

The occupant restraint means comprises:
an air bag for restraining an occupant in a vehicle; and
expansion means which propels a gas into the air bag to expand the air bag; and
the control means may also start the expansion means depending on an output from the acceleration sensor.

The occupant restraint system according to the present invention may also further comprises:
a first spacer arranged between the affixer and an outside plate of the door.

The occupant restraint system according to the present invention may also further comprises a plurality of second spacers arranged between the beam and an outside plate of the door.

A hardness of the first spacer may also be greater than a hardness of the second spacer.

The first spacer may also be a spring.

The occupant restraint system according to the present invention may also further comprise a protective member which avoids interference between the acceleration sensor and a window disposed on the door.

### Effects of the Invention

In accordance with the present invention, an acceleration sensor may be used as a sensor which detects a side surface collision and consequently the manufacturing cost of a device can be reduced.

### Brief Description of Drawings

FIG. 1 is a block diagram of an occupant restraint system according to the present embodiment;
FIG. 2 is a view illustrating the arrangement of each portion constituting the occupant restraint system;
FIG. 3 is a view illustrating the behavior of an air bag unit after operation;
FIG. 4 is a view illustrating an acceleration sensor as well as a beam;
FIG. 5 is a perspective view illustrating a support member as well as the beam;
FIG. 6 is a side view illustrating the support member as well as the beam;
FIG. 7 is a view for explaining the cause of the mounting position of the beam;
FIG. 8 is a view (1) for explaining an effect due to the support member;
FIG. 9 is a view (2) for explaining an effect due to the support member;
FIG. 10a is a view indicating a relationship between an output from an acceleration sensor mounted directly on a beam and time;
FIG. 10b is a view indicating a relationship between an output from the acceleration sensor mounted on the beam via the support member and time;
FIG. 11 is a view indicating a relationship between the moving distance and moving speed of the beam;
FIG. 12 is a view illustrating a beam and a support member according to Variation 1;
FIG. 13 is a view illustrating a beam and a support member according to Variation 2;
FIG. 14 is a view illustrating a support member according to Variation 3;
FIG. 15 is a view (1) illustrating a positional relationship between the acceleration sensor and a window;
FIG. 16 is a view illustrating a guide member;
FIG. 17 is a view illustrating a beam and a support member according to Variation 4;
FIG. 18 is a view illustrating a support member according to Variation 5;
FIG. 19 is a view (2) illustrating a positional relationship between the acceleration sensor and the window;
FIG. 20 is a view illustrating a spacer arranged between the outside plate of a right door and the support member;
FIG. 21 is a view illustrating a spring as a spacer; and
FIG. 22 is a view illustrating spacers arranged between the beam and the outside plate of the door.

### Mode for Carrying Out the Invention

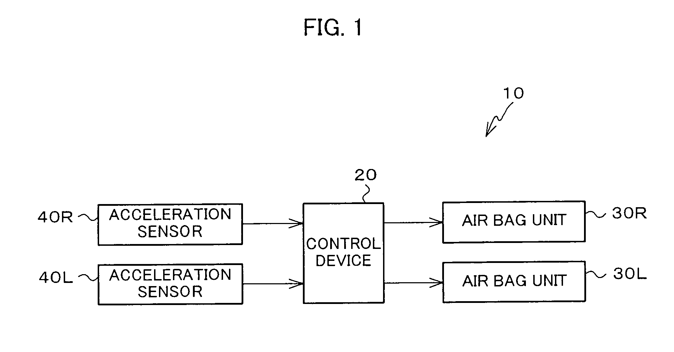

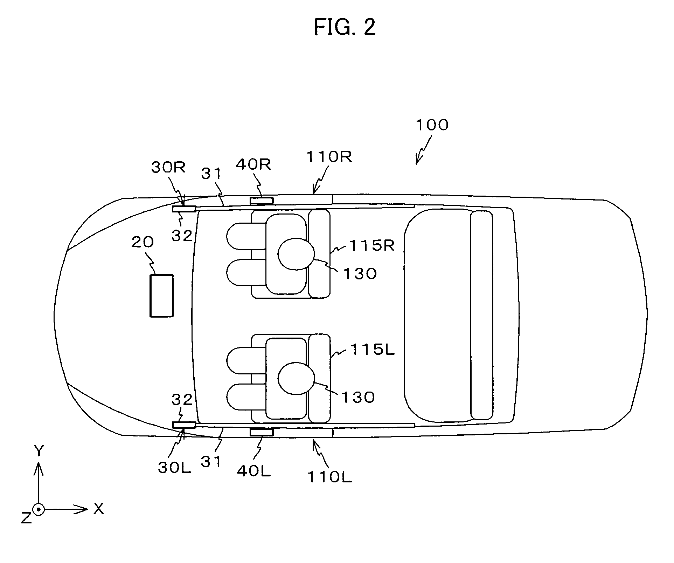

One embodiment of the present invention will be described below referring to the drawings. FIG. 1 is a block diagram of an occupant restraint system 10 according to the present embodiment. In addition, FIG. 2 is a view illustrating the arrangement of each portion constituting the occupant restraint system 10.

The occupant restraint system 10 is a device for restraining occupants 130 seated on seats 115R, 115L when a side surface collision occurs in a vehicle 100. As illustrated in FIG. 1 and FIG. 2, this occupant restraint system 10 includes: air bag units 30R, 30L arranged on the sides of the vehicle 100 of which the traveling direction is the -X direction; an acceleration sensor 40R arranged in a right door 110R; an acceleration sensor 40L arranged in a left door 110L; and a control device 20 which controls the air bag units 30R, 30L based on outputs from the acceleration sensors 40R and 40L.

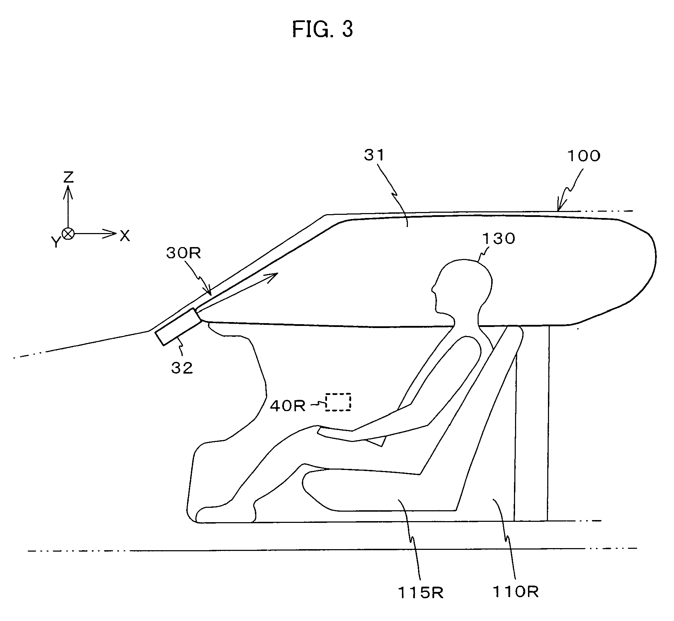

FIG. 3 is a view illustrating the behavior of the air bag unit 30R after operation. As can be understood with reference to FIG. 3, the air bag units 30R, 30L include: air bags 31 which are expanded between the occupants 130 and the doors 110R and 110L; and inflators 32 which propel gases into the air bags 31.

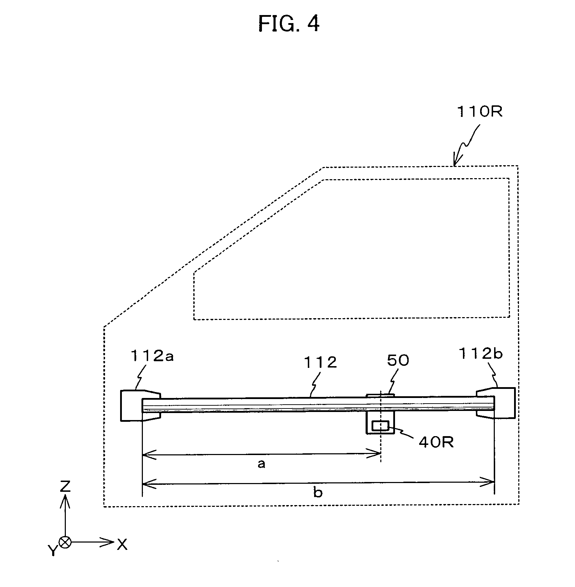

As can be understood with reference to FIG. 2, the acceleration sensor 40R is arranged between the outside plate constituting the right door 110R of the vehicle 100 and the inner panel of the right door 110R. FIG. 4 is a view illustrating the acceleration sensor 40R as well as a beam 112. As illustrated in FIG. 4, the acceleration sensor 40R is mounted on the beam 112 via a support member 50.

The beam 112 is a cylindrical long member of which the longitudinal direction is the X-axis direction (front-back direction of the vehicle). This beam 112 is approximately horizontally installed in a space sectioned by the outside plate of the door of the vehicle 100 and the inner panel by fixing mounts 112a and 112b, formed on both ends, in the frame of the right door 110R. This beam 112 is curved to be convex toward the inside of the vehicle 100 due to deformation of the outside plate when a side surface collision occurs in the vehicle 100.

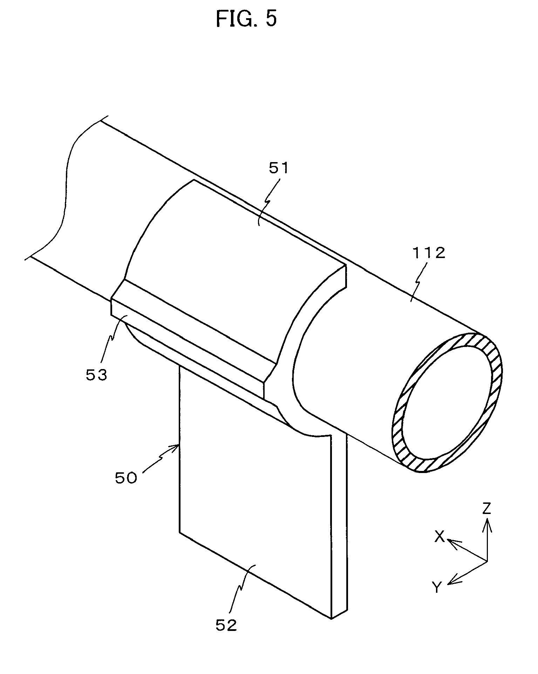

FIG. 5 is a perspective view illustrating the support member 50 as well as the beam 112. As illustrated in FIG. 5, the support member 50 is a member including two parts: an affixer 51 affixed to the beam 112; and a supporter 52 extending downward (-Z direction) from the bottom end of the affixer 51.

The affixer 51 is shaped so that a -Y-side surface brought into contact with the beam 112 is a curved surface which is curved at a curvature equivalent to that of the side surface of the beam 112. In addition, a protrusion 53 which protrudes in the +Y direction is formed on a +Y-side surface.

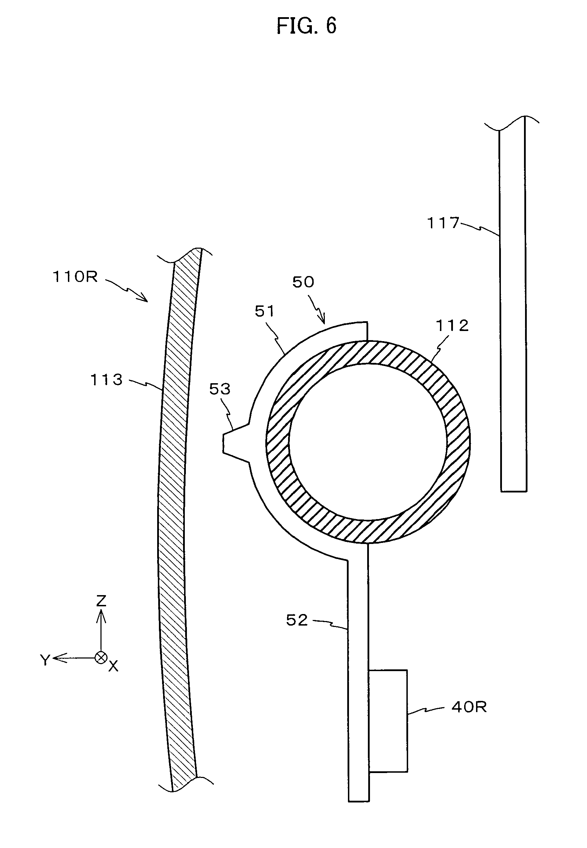

The supporter 52 is shaped in a rectangular shape of which the longitudinal direction is the Z-axis direction. In addition, as illustrated in FIG. 6, the acceleration sensor 40R is affixed to the -Y-side surface.

The above-mentioned support member 50 is affixed to the beam 112 by, for example, welding several places of the affixer 51 to the beam 112 such that the -Y-side surface of the affixer 51 is brought into contact with the side of the beam 112. As a result, the support member 50 is in the state in which the protrusion 53 faces the outside plate 113 of the right door 110R, as illustrated in FIG. 6. Then, the acceleration sensor 40R becomes in the state of being supported in the lower part of a window 117 with respect to the Z-axis direction.

In addition, as illustrated in FIG. 4, in the present embodiment, the support member 50 is mounted at a position where a ratio (a/b) of a distance a from the -X-side end (front end) of the beam 112 to the support member 50 to the length b of the beam 112 is 1/2 or more and 3/4 or less.

The acceleration sensor 40L is also mounted on a beam disposed on the left door 110L constituting the vehicle 100 via a support member 50, similarly to the acceleration sensor 40R.

The control device 20 is a computer including a CPU (central processing unit), a main storer, and an auxiliary storer. This control device 20 detects a side surface collision to the vehicle 100 via the acceleration sensors 40R and/or 40L. Then, when the side surface collision is detected, the air bag units 30R and 30L are deployed.

A description is now made of the operation of the occupant restraint system 10 constituted as mentioned above. The occupant restraint system 10 is started when any occupant 130 boarding the vehicle 100 turns on the ignition switch of the vehicle 100. When the occupant restraint system 10 is started, the control device 20 starts detection of the acceleration of the vehicle 100 via the acceleration sensors 40R and/or 40L.

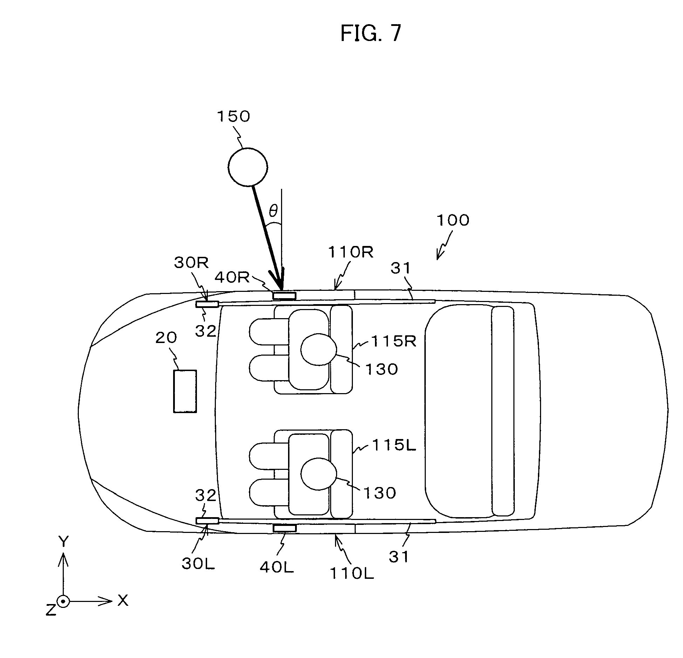

For example, as illustrated in FIG. 7, the case in which a pole 150 moves at a specified speed (e.g., 30 km/h) in a direction at an angle of θ (e.g., 15 degrees) with respect to the Y-axis perpendicular to the traveling direction of the vehicle and collides with in the right door 110R of the vehicle 100 is considered.

As can be understood with reference to FIG. 6, in this case, the pole 150 first collides with the outside plate 113 of the right door 110R. Then, the pole 150 moves together with the outside plate 113 at a speed approximately equivalent to the speed at the time of the collision and collides with the beam 112 or the support member 50 via the outside plate 113. By this collision, a force acting on the beam 112 or the support member 50 is transmitted to the acceleration sensor 40R via the supporter 52 of the support member 50.

In a force finally received by the acceleration sensor 40R, an impact value is decreased and a duration is extended, compared with the force acting directly on the beam 112 or the support member 50, by the elasticity of the supporter 52.

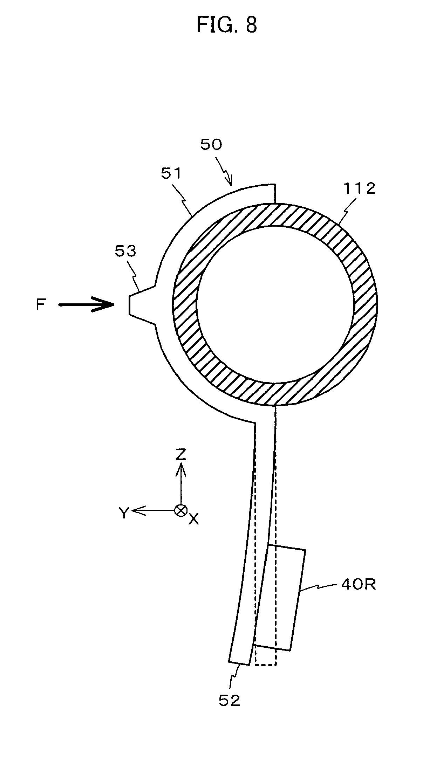

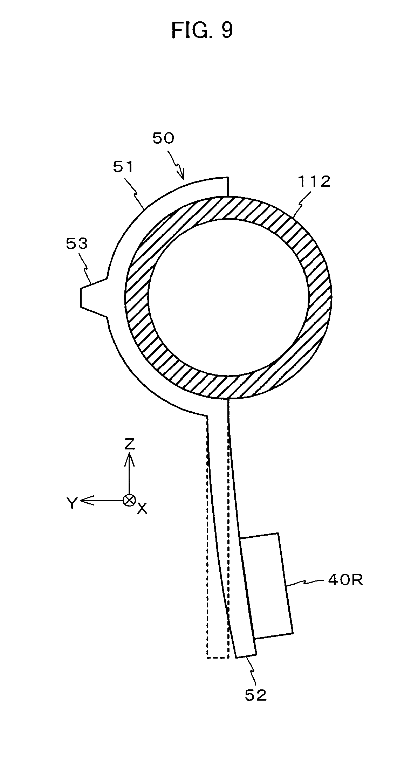

For example, when a force F due to a collision acts on the beam 112 or the support member 50, the supporter 52 of the support member 50 is curved to be convex toward the -Y direction as illustrated in FIG. 8, from a state without bending as illustrated in FIG. 6. Thereafter, the supporter 52 dampens energy due to vibrations while alternately repeating this state and the state of being curved to be convex toward the +Y direction as illustrated in FIG. 9. As a result, in a force received by the acceleration sensor 40R, an impact value is decreased and a duration is extended.

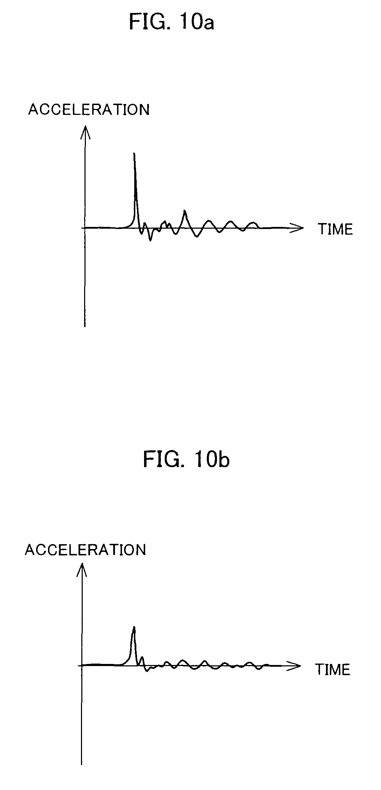

FIG. 10a is a view indicating a relationship between an output from an acceleration sensor 40R' mounted directly on the beam 112 and time. In addition, FIG. 10b is a view indicating a relationship between an output from the acceleration sensor 40R mounted on the beam 112 via the support member 50 and time. As can be understood with reference to FIG. 10a and FIG. 10b, it is understood that, when a horizontal force acts on the beam 112, in the output from the acceleration sensor 40R, an impact value is decreased and a duration is extended, compared with the output from the acceleration sensor 40R' mounted directly on the beam 112.

The control device 20 performs an integral process of an output from the acceleration sensor 40R at base time intervals. Then, the moving speed and moving distance of the beam 112 due to a collision are calculated from the result of the integral process. In the output from the acceleration sensor 40R, an impact value is less but a duration is extended, compared with an output from the acceleration sensor 40R' mounted directly on the beam 112, as mentioned above.

Therefore, the moving speed and moving distance of the beam 112, calculated based on the output from the acceleration sensor 40R, become approximately equivalent to the moving speed and the moving distance which are calculated based on the output from the acceleration sensor mounted directly on the beam 112. Accordingly, the moving speed and moving distance of the beam 112 can precisely be calculated based on the output from the acceleration sensor 40R mounted on the beam 112 via the support member 50.

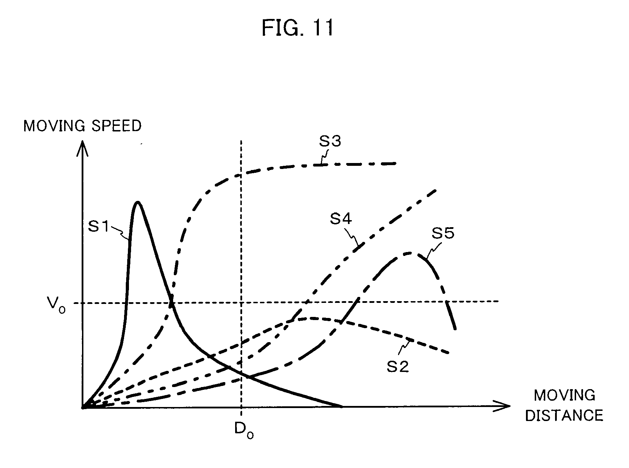

The control device 20 judges that a side surface collision occurs in the vehicle 100 when the moving speed and the moving distance which are calculated exceed threshold values. FIG. 11 is a view indicating a relationship between the moving distance and moving speed of the beam 112.

The control device 20 has information on a threshold value V₀ for a moving speed (e.g., 5.56 m/s (= 20 km/h)) and a threshold value Do for a moving distance (e.g., 15 mm). In addition, the control device 20 judges that a severe side surface collision occurs in the vehicle 100 only when the moving distance of the beam 112 exceeds the threshold value Do and thereafter the moving speed of the beam 112 exceeds the threshold value V₀. The severe side surface collision refers to a side surface collision which may cause the occupant 130 to be physically injured.

For example, a curve S1 is a curve seen when an object having a small mass collides with the side of the vehicle 100 at a high speed. Even if the object having a small mass collides with the vehicle 100 at a high speed, the occupant 130 receives no great shock. In such a case, the control device 20 judges that no severe side surface collision has occured in the vehicle 100.

In addition, a curve S2 is a curve seen when an object having a large mass collides with the side of the vehicle 100 at a low speed. Even in the case of the object having a large mass, when it collides with the vehicle 100 at a low speed, the occupant 130 receives no great shock. In such a case, the control device 20 judges that no severe side surface collision has occured in the vehicle 100. As a result, the air bag 31 is avoided from being expanded mistakenly.

On the other hand, a curve S3 is a straight line seen when an object having a large mass collides with the vehicle 100 at a high speed. In addition, a curve S4 is a straight line seen when an object having a large mass collides with the vehicle 100 at a speed to some extent. In addition, a curve S5 is a straight line seen when an object having a mass to some extent collides with the vehicle 100 at a speed to some extent. When the moving distance and moving speed of the beam 112 changes as indicated by the curves S3 to S4, respectively, the moving distance of the beam 112 became equal to or more than the threshold value Do and thereafter the moving speed becomes equal to or more than the threshold value V₀. In such a case, the control device 20 judges that a severe side surface collision has occured in the vehicle 100.

The control device 20 outputs an ignition command to the inflator 32 of the air bag unit 30R when judging that the severe side surface collision has occured. As a result, the inflator 32 is operated to propel a gas into the air bag 31. Then, the air bag 31 is expanded between the head of the occupant 130 and the right door 110R.

As explained above, in the present embodiment, the acceleration sensors 40R and 40L for detecting a side surface collision occurring in the vehicle 100 are mounted on the beams 112 of the right door 110R and the left door 110L via the support members 50. Therefore, even if a force due to the collision acts on the beams 112, this force is dampened by the support members 50 and thereafter transmitted to the acceleration sensors 40R and 40L.

As a result, even if the beams 112 move at accelerations exceeding the rated inputs of the acceleration sensors 40R and 40L, the accelerations of the acceleration sensors 40R and 40L are suppressed to levels not greater than the rated inputs. Accordingly, the accelerations equal to or greater than the rated inputs are not input into the acceleration sensors 40R and 40L, outputs from the acceleration sensors are not saturated, and therefore, consequently, occurrence of a side surface collision can be detected with high accuracy.

In addition, in the present embodiment, even if the beams 112 move at accelerations exceeding the rated inputs of the acceleration sensors 40R and 40L, the acceleration readings of the acceleration sensors 40R and 40L are suppressed to levels not greater than the rated inputs. Accordingly, the acceleration sensors 40R and 40L, having low rate input values, for detecting a side surface collision occurring in the vehicle 100 may be used and consequently the manufacturing cost of the occupant restraint system 10 can be reduced.

In addition, in the present embodiment, the acceleration sensors 40R and 40L are mounted at positions where ratios (a/b) of distances a from the -X-side ends (front ends) of the beams 112 to the support members 50 to the lengths b of the beams 112 are 1/2 or more and 3/4 or less. Generally, when a pole-like object collides with a section from the front end to the position of b/2 to 3b/4 of the beam 112, the possibility that any occupant 130 is seriously damaged is increased.

For example, a test to collide a columnar pole of 254 mm in diameter with a door of a vehicle is specified in the United States side surface collision standards (FMVSS214). In this test, two collision positions determined depending on the build of an occupant are specified. Each position corresponds to the intersection of a straight line through the center of gravity of the head of the occupant who is in the state of being seated and at an angle of 75 degrees with respect to the traveling direction of a car and the outside plate of a door. In addition, each position corresponds to the vicinity of the position at a distance of b/2 from the front end of the beam 112 (hereinafter also referred to as first position), for example, when an AF 5% equivalent-dummy is used, or corresponds to the vicinity of the position at a distance of 3b/4 from the front end of the beam 112 (hereinafter also referred to as second position) when an AM 50% equivalent-dummy is used.

It is considered that, when a pole collides with the first position and the second position mentioned above, the head and chest of the occupant are seriously damaged by the pole traveling to the inside of the vehicle after the collision. Therefore, it is necessary to quickly operate the inflator when collisions occur at the first position and the second position. Since the acceleration sensors 40R and 40L of the occupant restraint system 10 according to the present embodiment are arranged around the first position and the second position, a collision that seriously damages the occupant 130 can be detected with high accuracy and quickly.

In addition, in the present embodiment, the control device 20 compares the moving speed and the moving distance, which are calculated, with the threshold value V₀ and the threshold value Do to detect a severe side surface collision occurring in the vehicle 100. As a result, the air bag 31 can be expanded only when a severe side surface collision occurs in the vehicle 100. Accordingly, the frequency of the occurrence of the malfunction of the occupant restraint system 10 can be reduced.

It is also conceivable that a moving speed and a moving distance are detected, for example, using a displacement sensor and/or the like. However, for example, it is necessary to mount a target on one of the inner panel and the beam of a door and to mount a sensor (e.g., coil) for detecting a distance to the target on the other when the displacement sensor is used as detecting means. In this case, the procedure of an initial adjustment is complicated and it is necessary to separately find a space for mounting both target and sensor. On the other hand, the acceleration sensors are used as detecting means in the occupant restraint system 10 according to the present embodiment. Therefore, there is almost no need to perform the initial adjustment. In addition, the space for mounting a sensor may also be small. Therefore, the degree of freedom of mounting is also increased.

In addition, the occupant restraint system 10 according to the present embodiment is advantageous in the degree of freedom in installation and accuracy because there is no requirement for an object to be a target.

In addition, the support member 50 according to the present embodiment includes the protrusion 53 which protrudes toward the outside plate of the door. Therefore, a distance between the outside plate of the door and the support member 50 is decreased to enable quick detection of a side surface collision.

In addition, in the present embodiment, a detection unit is constituted by the support members 50 and the acceleration sensors 40R and40L. In addition, the side surface collision detection system which detects a side surface collision occurring in the vehicle 100 is constituted by the detection unit and the control device 20. An output from the acceleration sensors 40R and 40L constituting the detection unit or the side surface collision detection system may be used for controlling an occupant restraint device such as an air bag unit or a seat belt device which is operated to restrain any occupant 130 when a side surface collision occurs in the vehicle 100. Further, it may be used for controlling a display device for displaying occurrence of a side surface collision in the vehicle 100 or a voice-output device.

The embodiment of the present invention has been described above but the present invention is not limited to the above-described embodiment.

For example, in the above-described embodiment, the beam 112 has been described as being cylindrical. The beam 112 is not limited thereto but may not be cylindrical.

### <Variation 1>

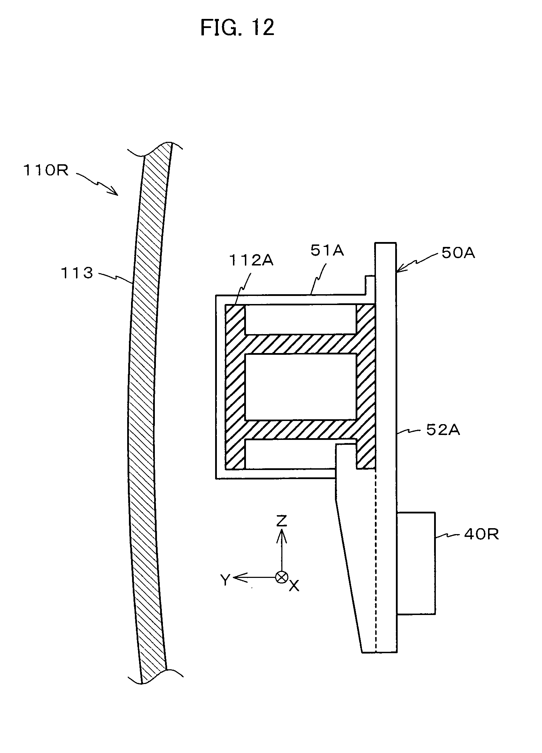

FIG. 12 is a view illustrating a beam 112A having a rectangular ZY cross section and a support member 50A according to Variation 1. As illustrated in FIG. 12, the support member 50A is constituted by a bracket 52A on the -Y-side surface of which an acceleration sensor 40R was affixed and a mounting member 51 A which includes a material having elasticity and has a U-shaped ZY cross section. This support member 50A is mounted on the beam 112A by integrating the mounting member 51A and the bracket 52A in the state of sandwiching the beam 112A.

### <Variation 2>

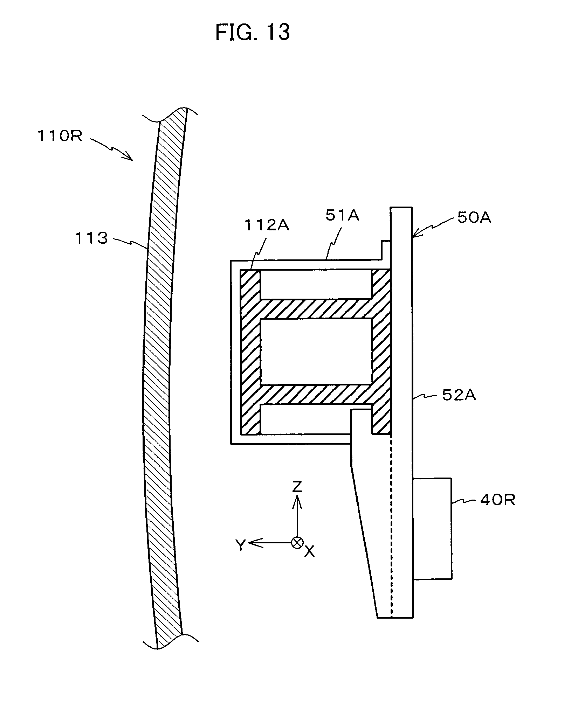

FIG. 13 is a view illustrating a beam 112B and a support member 50B according to Variation 2. As illustrated in FIG. 13, the beam 112B is a member of which the ZY cross section has a meandering shape. In addition, the support member 50B is a plate-like member of which the longitudinal direction is the Z-axis direction. In addition, an acceleration sensor 40R is affixed on the -Y-side surface of a lower end. This support member SOB is mounted on the beam 112B by welding an upper end to the beam 112B.

In the above-described Variation 1 and Variation 2, even if a force due to a collision acts on the beam 112A or the beam 112B, this force is dampened by the support member 50A or the support member 50B and thereafter transmitted to the acceleration sensor 40R.

As a result, even if the beam moves at an acceleration exceeding the rated input of the acceleration sensor, the acceleration of the acceleration sensor is suppressed to a level not greater than the rated input. Accordingly, the acceleration equal to or greater than the rating is not input into the acceleration sensor, an output from the acceleration sensor is not saturated, and therefore, consequently, occurrence of a side surface collision can be detected with high accuracy.

In addition, in the present embodiment, for example, as illustrated in FIG. 6, the acceleration sensor is supported at the position offset downward to the beam. Without limitation thereto, the acceleration sensor may also be arranged at the same height as that of the beam.

### <Variation 3>

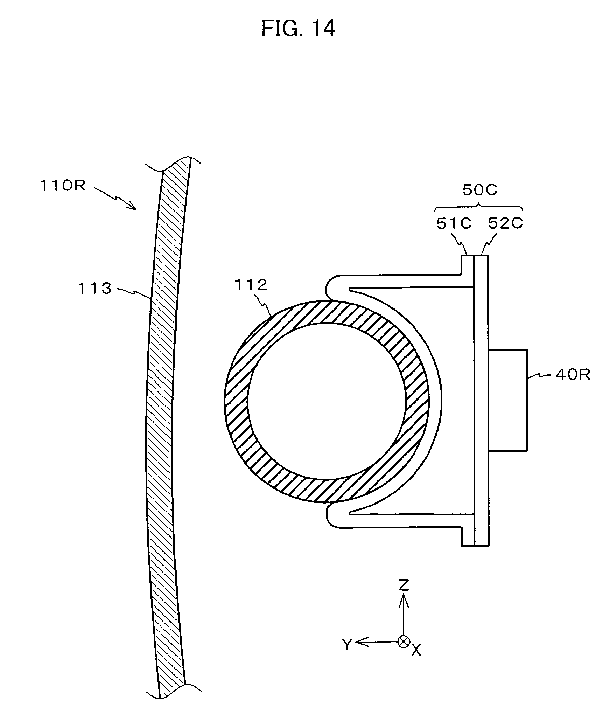

FIG. 14 illustrates a support member 50C including a mounting member 51C which includes an elastic member and is affixed to a beam 112 and a support plate 52C which is affixed to the mounting member 51C. In the present Variation 3, a force acting on the beam 112 is dampened by the support member 50C and thereafter transmitted to an acceleration sensor 40R.

As a result, even if the beam moves at an acceleration rate exceeding the rated input of the acceleration sensor, the acceleration reading of the acceleration sensor is suppressed to a level not greater than the rated input. Accordingly, an output from the acceleration sensor is not saturated and occurrence of a side surface collision can be detected with high accuracy.

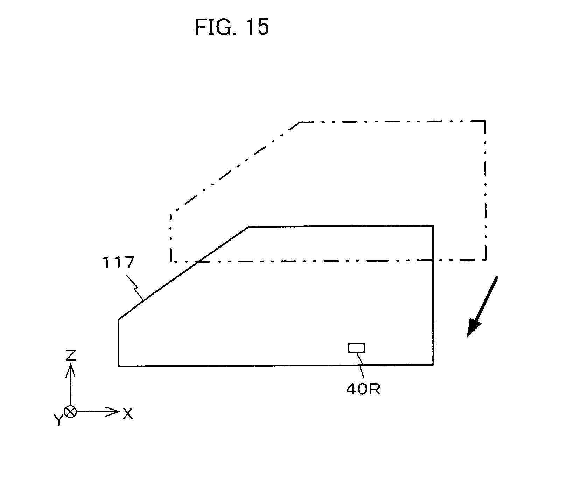

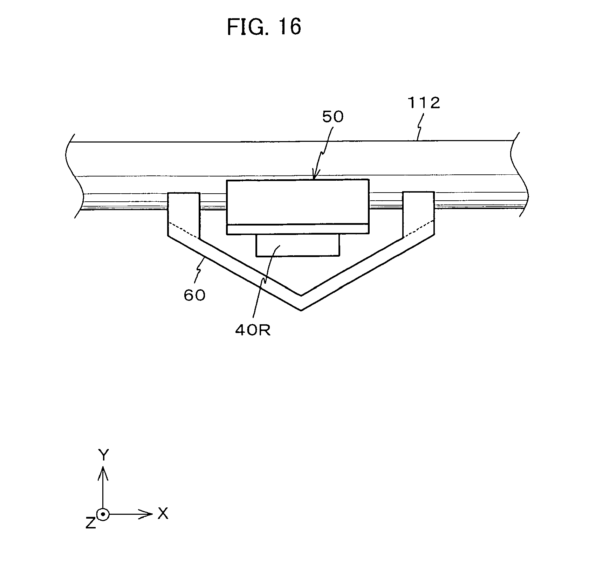

FIG. 15 is a view illustrating the acceleration sensor 40R and a window 117. When the window 117 is lowered from a position indicated by a virtual line to a position indicated by a continuous line, the acceleration sensor 40R may be located on the -Y side of the window 117. In such a case, when a side surface collision occurs in a vehicle 100, the acceleration sensor 40R interferes with the window 117. Thus, as an example, a guide member 60 for avoiding interference between the acceleration sensor 40R and the window 117 may also be arranged on the beam 112 as illustrated in FIG. 16.

The guide member 60 affixed to the beam 112 moves together with the beam 112 at the time of a side surface collision and breaks a part of the window 117 prior to the interference between the acceleration sensor 40R and the window 117. As a result, the interference between the acceleration sensor 40R and the window 117 is avoided to consequently enable detection of a side surface collision with high accuracy. The guide member 60 may also be disposed on a support member 50.

When a space for accommodating the acceleration sensor is formed in the beam, the space may also accommodate the acceleration sensor.

### <Variation 4>

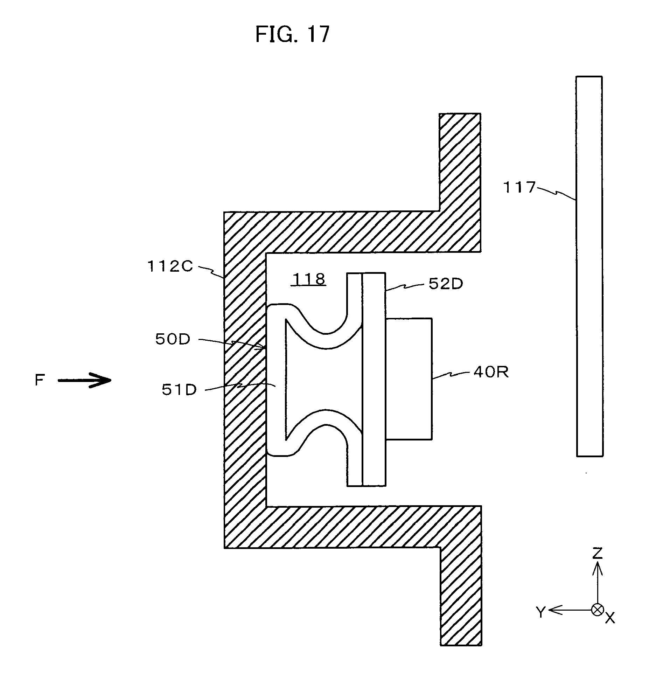

For example, when a beam 112C includes a space 118 which can accommodate an acceleration sensor 40R as illustrated in FIG. 17, an acceleration sensor 40R may also be accommodated in the space 118 in the state of being supported by a support member 50D.

As illustrated in FIG. 17, the acceleration sensor 40R is supported by the support member 50D constituted by a mounting member 51D having elasticity and a support plate 52D affixed to the mounting member 51D. In Variation 4, even if a force F due to a collision acts on the beam 112C and the acceleration sensor 40R moves together with the beam 112C in the -Y direction, the acceleration sensor 40R does not interfere with a window 117. Therefore, a side surface collision can be detected with high accuracy.

### <Variation 5>

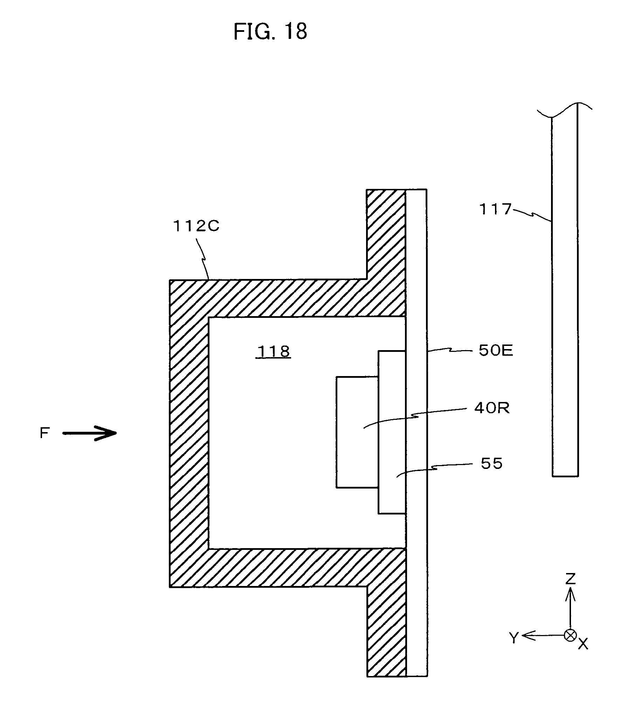

As illustrated in FIG. 18, a space 118 as an enclosed space may also be formed of a beam 112C and the +Y-side surface of a support member 50E affixed to the beam 112C to mount an acceleration sensor 40R on the +Y-side surface of the support member 50E via, for example, an elastic member 55. In this case, interference between the acceleration sensor 40R and a window 117 is also avoided at the time of a side surface collision to enable detection of the side surface collision with high accuracy.

### <Variation 6>

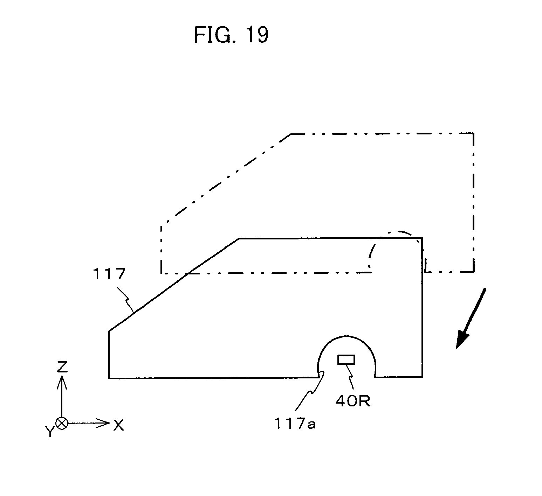

For example, as illustrated in FIG. 19, a notch 117a may also be formed in a window 117 to avoid interference between an acceleration sensor 40R and the window 117 at the time of a side surface collision.

### <Variation 7>

Although there is a gap between the outside plate of the door and the support member in the above-described embodiment, for example, a spacer may also be arranged in this gap.

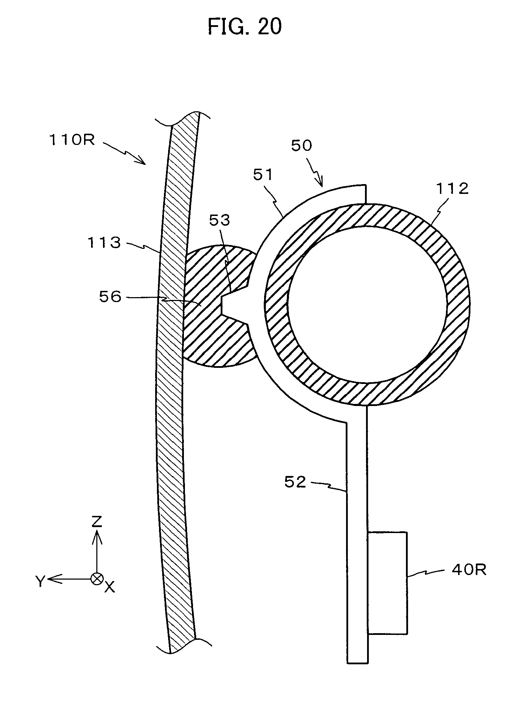

FIG. 20 illustrates a spacer 56 arranged between an outside plate 113 of a right door 110R and a support member 50. A time lag from the occurrence of a side surface collision to the contact of the outside plate 113 with the support member 50 is eliminated by arranging the spacer 56 between the outside plate 113 and the support member 50 as illustrated in FIG. 20. Accordingly, the side surface collision can be detected quickly.

When a minor collision with the outside plate occurs, it is necessary to avoid an occupant restraint system 10 from malfunctioning. Therefore, it is preferable to use an elastic member such as rubber or silicon as the spacer 56.

### <Variation 8>

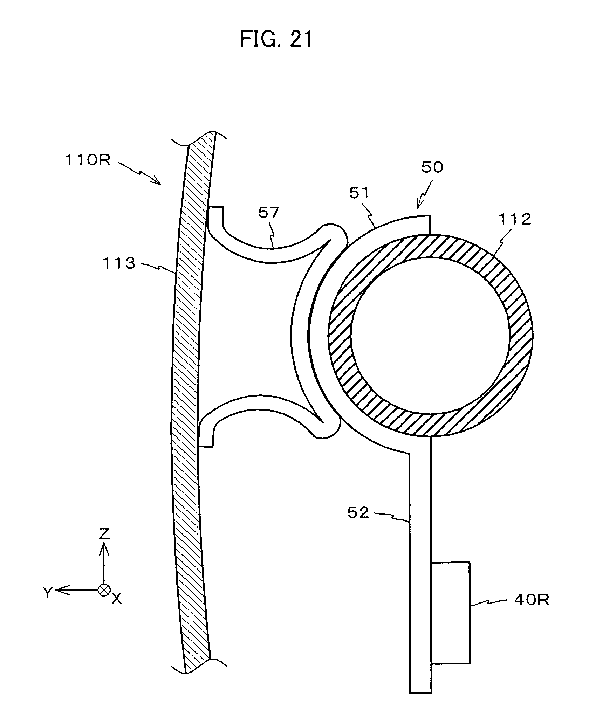

As illustrated in FIG. 21, a spring 57 which can generate an elastic force in the Y-axis direction may also be arranged as a spacer.

### <Variation 9>

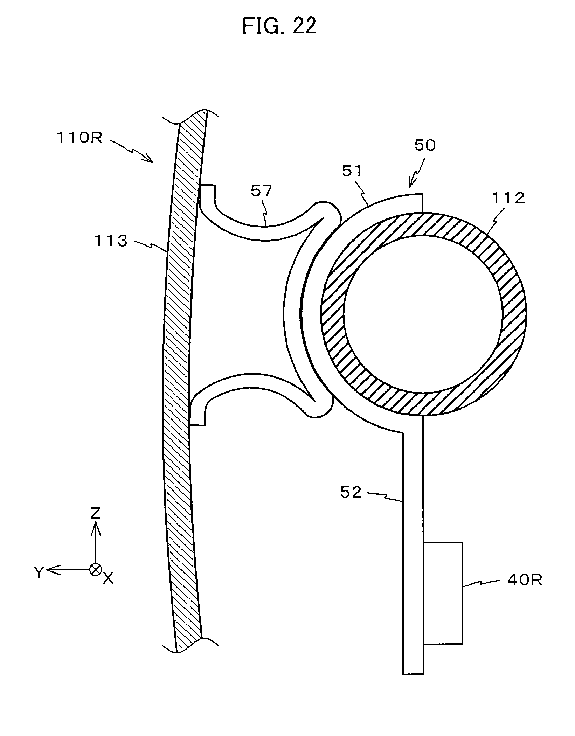

As illustrated in FIG. 22, a plurality of spacers 58 may also be arranged between a beam 112 and the outside plate of a right door 110R. In this case, the hardness of a spacer 56 arranged between a support member 50 and the outside plate of the right door 110R is preferably less than those of the spacers 58.

In addition, as can be understood referring to FIG. 1, in the above-described embodiment, the occupant restraint system 10 includes the acceleration sensors 40R and 40L for detecting a side surface collision. To detect a side surface collision with each door, the occupant restraint system 10 preferably includes two or more acceleration sensors, for example, when the vehicle 100 is a two-door vehicle, and four or more acceleration sensors when the vehicle 100 is a four-door vehicle.

In addition, in the present embodiment, the acceleration sensor 40R is supported at the position offset downward from the beam 112. Without limitation thereto, the acceleration sensor 40R may also be supported at a position offset upward from the beam 112. The support member 50 may also be arranged so that the supporter 52 is tilted toward the Z-axis, to arrange the acceleration sensor 40R at a position deviating in the Y-axis from the position illustrated in FIG. 6.

Various embodiments and variations can be made in the present invention without departing from the broad spirit and scope of the present invention. The above-mentioned embodiment is intended to explain the present invention and the scope of the present invention is not limited thereto.

This application is based on Japanese Patent Application No. 2010-52420, filed on March 9, 2010, including its specification, claims, drawings, and abstract. The disclosure of the above-described Japanese Patent Application is incorporated herein by reference in its entirety.

### Industrial Applicability

The support member according to the present invention is suitable for supporting an acceleration sensor on a beam. In addition, the detection unit according to the present invention is suitable for detecting acceleration. In addition, the side surface collision detection system according to the present invention is suitable for detecting a side surface collision in a vehicle. In addition, the occupant restraint system according to the present invention is suitable for restraining an occupant.

### Description of Reference Numerals

- 10: Occupant restraint system
- 20: Control device
- 30R, 30L: Air bag unit
- 31: Air bag
- 32: Inflator
- 40R, 40L: Acceleration sensor
- 50: Support member
- 50A: Support member
- 50B: Support member
- 50C: Support member
- 50D: Support member
- 50E: Support member
- 51: Affixer
- 51 A: Mounting member
- 51 C: Mounting member
- 51 D: Mounting member
- 52: Supporter
- 52A: Bracket
- 52C: Support plate
- 52D: Support plate
- 53: Protrusion
- 55: Elastic member
- 56, 58: Spacer
- 57: Spring
- 60: Guide member
- 100: Vehicle
- 110R: Right door
- 110L: Left door
- 112: Beam
- 112A: Beam
- 112B: Beam
- 112C: Beam
- 112a, 112b: Mount
- 113: Outside plate
- 115R, 115L: Seat
- 117: Window
- 118: Space
- 130: Occupant
- 150: Pole
- F: Force

## Claims

1. A support member which supports an acceleration sensor on a beam disposed on a door of a vehicle, the support member comprising:
an affixer affixed to the beam; and
a supporter which supports the acceleration sensor at a position apart from the affixer,
wherein the supporter dampens a force, transmitted from the beam to the acceleration sensor, by elasticity.

2. The support member according to claim 1, wherein the supporter supports the acceleration sensor at a position offset vertically downward from the affixer.

3. The support member according to claim 1 or 2, further comprising a protrusion which protrudes toward an outside plate of the door.

4. The support member according to any one of claims 1 to 3, wherein the acceleration sensor is affixed to an opposite surface of a surface, facing an outside plate of the door, of the supporter; and
the support member further comprises a protector which avoids interference between the acceleration sensor and a window disposed on the door.

5. A detection unit comprising:
an acceleration sensor which detects an acceleration rate; and
the support member according to any one of claims 1 to 4, which supports the acceleration sensor.

6. A side surface collision detection system which detects a side surface collision in a vehicle, the side surface collision detection system comprising:
an acceleration sensor supported by the support member according to any one of claims 1 to 4; and
detecting means which detects a side surface collision occurring in the vehicle based on an output from the acceleration sensor.

7. An occupant restraint system comprising:
the side surface collision detection system according to claim 6;
occupant restraint means which restrains an occupant in the vehicle; and
control means which controls the occupant restraint means when a side surface collision is detected by the side surface collision detection system.

8. The occupant restraint system according to claim 7, wherein the occupant restraint means comprises:
an air bag for restraining an occupant in a vehicle; and
expansion means which propels a gas into the air bag to expand the air bag; and
the control means starts the expansion means depending on an output from the acceleration sensor.

9. The occupant restraint system according to claim 7 or 8, further comprising a first spacer arranged between the affixer and an outside plate of the door.

10. The occupant restraint system according to claim 9, further comprising a plurality of second spacers arranged between the beam and an outside plate of the door.

11. The occupant restraint system according to claim 10, wherein a hardness of the first spacer is greater than a hardness of the second spacer.

12. The occupant restraint system according to any one of claims 9 to 11, wherein the first spacer is a spring.

13. The occupant restraint system according to any one of claims 7 to 12, further comprising a protective member which avoids interference between the acceleration sensor and a window disposed on the door.
